(19) **Europäisches Patentamt**
**European Patent Office**
**Office européen des brevets**

(11) **EP 4 700 729 A1**

(12) **EUROPEAN PATENT APPLICATION**
published in accordance with Art. 153(4) EPC

(43) Date of publication:
**25.02.2026 Bulletin 2026/09**

(21) Application number: **24875768.4**

(22) Date of filing: **28.11.2024**

(51) International Patent Classification (IPC):
*G07F 15/12* (2006.01)     *G06Q 50/10* (2012.01)
*G06Q 30/04* (2012.01)     *B60L 53/66* (2019.01)
*G06Q 20/14* (2012.01)     *G06Q 50/06* (2024.01)
*G06Q 30/0283* (2023.01)

(52) Cooperative Patent Classification (CPC):
**G06Q 30/04; B60L 53/665; G06Q 20/145;
G06Q 30/0283; G06Q 50/06; G07F 15/005;
Y02T 90/12**

(86) International application number:
**PCT/CN2024/135365**

(87) International publication number:
**WO 2026/011664 (15.01.2026 Gazette 2026/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **09.07.2024   CN 202410912357**

(71) Applicants:
• **Contemporary Amperex Technology Co., Limited
Jiaocheng District
Ningde
Fujian 352100 (CN)**
• **Contemporary Amperex Future Energy
Technology
(Shenzhen) Limited
Shenzhen, Guangdong 518100 (CN)**

(72) Inventors:
• **WU, Kai
Ningde, Fujian 352100 (CN)**

• **MA, Meng
Ningde, Fujian 352100 (CN)**
• **CHENG, Yong
Ningde, Fujian 352100 (CN)**
• **WANG, Pengmin
Ningde, Fujian 352100 (CN)**
• **ZHENG, Zhimin
Ningde, Fujian 352100 (CN)**
• **LI, Mao
Ningde, Fujian 352100 (CN)**
• **LIU, Yi
Ningde, Fujian 352100 (CN)**
• **CHEN, Zhuo
Ningde, Fujian 352100 (CN)**
• **ZHANG, Zhen
Ningde, Fujian 352100 (CN)**

(74) Representative: **Ran, Handong et al
Maucher Jenkins
Seventh Floor Offices
Artillery House
11-19 Artillery Row
London SW1P 1RT (GB)**

(54) **VEHICLE CHARGING BILLING METHOD, APPARATUS AND DEVICE, STORAGE MEDIUM AND PROGRAM PRODUCT**

(57)     The present application discloses a billing method, apparatus and device for vehicle charging, a storage medium, and a program product. The method includes: determining, based on a charging power range of a vehicle in a charging process and a charging duration of the charging power range, a charging time cost of a vehicle; determining, based on a charging electricity quantity, a charging electricity quantity cost of the vehicle; determining, based on the charging electricity quantity cost of the vehicle and the charging time cost of the vehicle, a charging cost of the vehicle; before the vehicle is charged, determining, based on vehicle type information of the vehicle, a predicted power range of the vehicle; determining, based on the predicted power range and a power range unit price, a charging time cost unit price of the vehicle; and determining a sum of a preset electricity quantity unit price, an electricity quantity service unit price and the charging time cost unit price as a predicted

**(Cont. next page)**

EP 4 700 729 A1

charging unit price of the vehicle.

| Acquire at least one piece of charging power information of a vehicle in a charging process and a charging electricity quantity of the vehicle | S101 |

↓

| Determine, based on at least one charging power range and a charging duration corresponding to the at least one charging power range, a charging time cost of the vehicle | S102 |

↓

| Determine, based on the charging electricity quantity, a charging electricity quantity cost of the vehicle | S103 |

↓

| Determine, based on the charging electricity quantity cost of the vehicle and the charging time cost of the vehicle, a charging cost of the vehicle | S104 |

FIG. 1

**Description**

**CROSS-REFERENCE TO RELATED APPLICATIONS**

The present application is proposed based on the Chinese patent application No. 202410912357.0 filed on July 09, 2024 and entitled "BILLING METHOD, APPARATUS AND DEVICE FOR VEHICLE CHARGING, STORAGE MEDIUM, AND PROGRAM PRODUCT", and claims the priority of the China patent application, the entire content of which is incorporated herein by reference.

**TECHNICAL FIELD**

The present application relates to the technical field of charging, and in particular, to a billing method, apparatus and device for vehicle charging, a storage medium, and a program product.

**BACKGROUND**

At present, with the rapid development of the new energy vehicle technology and the rapid increase in the number of new energy vehicles in cities, charging facilities supporting the new energy vehicles also develop rapidly accordingly. In order to meet the charging needs of the new energy vehicles to the maximum extent, in the related art, supercharging piles or fast charging piles are used to charge the new energy vehicles. However, a billing strategy for the supercharging piles or the fast charging piles in the related art is often only related to a charging electricity quantity, such a billing strategy does not conform to an economic benefit model of the supercharging piles or the fast charging piles, resulting in low accuracy of billing results for the supercharging piles or the fast charging piles.

**SUMMARY OF THE INVENTION**

In view of this, embodiments of the present application provide at least a billing method, apparatus and device for vehicle charging, a storage medium, and a program product.
Technical solutions of the embodiments of the present application are implemented as follows.
In a first aspect, an embodiment of the present application provides a billing method for vehicle charging, the billing method including:

acquiring at least one piece of charging power information of a vehicle in a charging process and a charging electricity quantity of the vehicle, the charging power information including a charging power range and a charging duration corresponding to the charging power range;
determining, based on the at least one charging power range and the charging duration respectively corresponding to the at least one charging power range, a charging time cost of the vehicle;
determining, based on the charging electricity quantity, a charging electricity quantity cost of the vehicle; and
determining, based on the charging electricity quantity cost of the vehicle and the charging time cost of the vehicle, a charging cost of the vehicle;
before the vehicle is charged, the billing method further including:

determining, based on vehicle type information of the vehicle, at least two predicted power ranges of the vehicle;
determining, based on the at least two predicted power ranges and power range unit prices respectively corresponding to the at least two predicted power ranges, a charging time cost unit price of the vehicle; and
determining a sum of a preset electricity quantity unit price, an electricity quantity service unit price and the charging time cost unit price as a predicted charging unit price of the vehicle.

In the embodiment of the present application, the charging time cost of the vehicle can be determined by means of the charging power range of the vehicle in the charging process and the charging duration corresponding to the charging power range, and the charging electricity quantity cost of the vehicle is determined by means of the charging electricity quantity of the vehicle. Finally, the charging time cost and the charging electricity quantity cost are determined as the charging cost of the vehicle. In this way, the final charging cost of the vehicle not only includes the charging electricity quantity cost, but also includes the charging time cost related to the charging power and charging time, so that the charging characteristic of higher timeliness of a supercharging pile or a fast charging pile can be reflected in the charging cost of the vehicle, which can conform to an economic benefit model of the supercharging pile or the fast charging pile, thereby improving the accuracy of a final billing result of the vehicle; at the same time, the charging time cost unit price of the vehicle is determined by means of the predicted power range of the vehicle, and the sum of the preset electricity quantity unit price, the electricity quantity service unit price and the charging time cost unit price is determined as the predicted charging unit price of the vehicle. In this way, a display unit of a charging unit price of the vehicle can be unified, so that when a user obtains the predicted charging unit price, the user can more accurately predict, according to the predicted charging unit price, the final charging cost.

In some embodiments, the determining, based on the at least one charging power range and the charging duration respectively corresponding to the at least one charging power range, a charging time cost of the vehicle includes: for each charging power range, determining, based on the charging power range, a power range unit price corresponding to the charging power range; for each charging power range, determining, based on the power range unit price corresponding to the charging power range and the charging duration corresponding to the charging power range, a charging time range cost of the charging power range; and determining a sum of the charging time range cost respectively corresponding to the at least one charging power range as the charging time cost of the vehicle.

In the embodiment of the present application, by determining the power range unit price corresponding to each charging power range, then the charging time range cost of each charging power range is determined based on the power range unit price and the charging duration corresponding to each charging power range. Finally, a sum of the charging time range costs of the various charging power ranges is determined as the charging time cost of the vehicle. In this way, the charging time cost of the vehicle is divided into different ranges according to the charging power of the vehicle. Different charging powers and durations for using the charging power correspond to different charging time range costs, so that the finally determined charging time cost can be more refined, thereby better reflecting the charging characteristic of the fast charging pile or the super charging pile.

In some embodiments, the method further includes: acquiring vehicle model information of the vehicle, the vehicle model information being used to characterizing a charging type that the vehicle can use in the charging process; and for each charging power range, based on the vehicle model information of the vehicle, updating the charging time range cost of the charging power range to obtain updated charging time range cost of the charging power range; and the determining a sum of the charging time range cost corresponding to the at least one charging power range as the charging time cost of the vehicle includes: determining a sum of the updated charging time range cost corresponding to the at least one charging power range as the charging time cost of the vehicle.

In the embodiment of the present application, the charging time range cost corresponding to each charging power range of the vehicle in the charging process can be adjusted according to the vehicle model information of the vehicle, thereby improving the flexibility of billing, so that the finally obtained charging cost not only reflects the charging characteristic of the charging pile, but also meets vehicle model characteristics of the vehicle.

In some embodiments, the determining, based on the charging electricity quantity, a charging electricity quantity cost includes: determining, based on the charging electricity quantity and the preset electricity quantity unit price, an electricity quantity cost; determining, based on the charging electricity quantity and the electricity quantity service unit price, a charging service cost, the electricity quantity service unit price being determined based on the vehicle model information of the vehicle; and determining a sum of the electricity quantity cost and the charging service cost as the charging electricity quantity cost.

In the embodiment of the present application, the electricity quantity service unit price is determined by means of the vehicle model information, and the charging service cost is determined by means of the electricity quantity service unit price and the charging electricity quantity. In this way, the charging service cost corresponding to a vehicle model can be determined according to vehicles in different models, so that the finally determined charging service cost is more matched with the vehicle model, thereby improving the accuracy of determining the charging service cost.

In some embodiments, the charging electricity quantity includes a charging sub-electricity quantity respectively corresponding to the at least one charging power range; the electricity quantity service unit price includes an electricity quantity service sub-unit price respectively corresponding to the at least one charging power range; the determining, based on the charging electricity quantity and the electricity quantity service unit price, a charging service cost includes: for each charging power range, determining, based on the electricity quantity service sub-unit price of the charging power range and the charging sub-electricity quantity corresponding to the charging power range, a charging service sub-cost of the charging power range; and determining a sum of the at least one charging service sub-cost as the charging service cost.

In the embodiment of the present application, the charging service sub-cost of each charging power range is determined based on the electricity quantity service sub-unit price corresponding to each charging power range and the charging sub-electricity quantity corresponding to each charging power range. Finally, a sum of the charging service sub-costs of the various charging power ranges is determined as the charging service cost of the vehicle. In this way, the charging electricity quantity of the vehicle is divided into different ranges according to the charging power of the vehicle, and the charging sub-electricity quantities corresponding to different charging powers correspond to different charging service sub-costs, so that the finally determined charging service cost can be more refined, thereby better reflecting the charging characteristic of the fast charging pile or the super charging pile.

In some embodiments, the method further includes: acquiring space occupation time of the vehicle, the space occupation time being the time during which the vehicle is in a charging platform but is not charged; and determining, based on the space occupation time and a space occupation time unit price, a space occupation cost of the vehicle; and the determining, based on the charging electricity quantity cost of the vehicle and the charging time cost of the vehicle, a charging cost of the vehicle includes: determining, based on the charging electricity quantity cost, the charging time cost and the space occupation cost, the charging cost of the vehicle.

In the embodiment of the present application, the space occupation cost of the vehicle can be determined by determining the space occupation time of the vehicle, so that the vehicle can enter the charging process or leave the charging platform as quickly as possible, thereby improving charging efficiency.

In some embodiments, determining, based on at least one predicted power range and the power range unit price corresponding to the at least one predicted power range, the charging time cost unit price of the vehicle includes: determining, based on the at least one predicted power range, a predicted average power of the vehicle; determining, based on the predicted charging electricity quantity of the vehicle and the predicted average power of the vehicle, predicted charging time of the vehicle; determining, based on the power range unit price respectively corresponding to the at least one predicted power range, an average power range unit price; and determining, based on the predicted charging time of the vehicle, the average power range unit price and the predicted charging electricity quantity of the vehicle, the charging time cost unit price of the vehicle.

In the embodiment of the present applications, the predicted average power of the vehicle is determined by means of the predicted power range; the predicted charging time of the vehicle is determined by means of the predicted charging electricity quantity of the vehicle and the predicted average power of the vehicle; the average power range unit price is determined by means of the power range unit price of the predicted power range; and the charging time cost unit price of the vehicle is determined by means of the predicted charging time of the vehicle, the average power range unit price and the predicted charging electricity quantity of the vehicle. In this way, units of the charging time cost unit price, the electricity quantity unit price and the electricity quantity service unit price can be unified, so that a sum of the charging time cost unit price, the electricity quantity unit price and the electricity quantity service unit price can be used as the predicted charging unit price of the vehicle.

In a second aspect, an embodiment of the present application provides a billing apparatus for vehicle charging, the billing apparatus for vehicle charging including:

an acquiring unit, configured to acquire at least one piece of charging power information of a vehicle in a charging process and a charging electricity quantity of the vehicle, the charging power information including a charging power range and a charging duration corresponding to the charging power range;
a first determining unit, configured to determine, based on the at least one charging power range and the charging duration respectively corresponding to the at least one charging power range, a charging time cost of the vehicle;
a second determining unit, configured to determine, based on the charging electricity quantity, a charging electricity quantity cost of the vehicle;
a third determining unit, configured to determine, based on the charging electricity quantity cost of the vehicle and the charging time cost of the vehicle, a charging cost of the vehicle; and
a fifth determining unit, configured to determine, based on vehicle type information of the vehicle, at least two predicted power ranges of the vehicle; determine, based on the at least two predicted power ranges and power range unit prices respectively corresponding to the at least two predicted power ranges, a charging time cost unit price of the vehicle; and determine a sum of a preset electricity quantity unit price, an electricity quantity service unit price and the charging time cost unit price as a predicted charging unit price of the vehicle.

In a third aspect, an embodiment of the present application provides a billing device for vehicle charging, including: a memory and a processor, where the memory stores computer programs capable of running on the processor, and the processor, when executing the program, implements some or all steps in the above method.

In a fourth aspect, an embodiment of the present application provides a computer-readable storage medium, storing computer programs therein, wherein the computer program, when executed by a processor, implements some or all steps in the above method.

In a fifth aspect, an embodiment of the present application provides a computer program product, including a computer program or instruction, wherein the computer program or instruction, when executed by a processor, implements some or all steps in the above method.

It should be understood that the above general description and the detailed descriptions that follow are exemplary and explanatory only and are not intended to limit the technical solutions of the present application.

## DESCRIPTION OF DRAWINGS

The accompanying drawings herein are incorporated into the description and constitute part of the description, illustrate the embodiments conforming to the present application, and are intended to explain the technical solutions of the present application together with the description.

FIG. 1 is a first schematic diagram of an implementation process of a billing method for vehicle charging provided by an embodiment of the present application;

FIG. 2 is a second schematic diagram of an implementation process of a billing method for vehicle charging provided by an embodiment of the present application;

FIG. 3 is a third schematic diagram of an implementation process of a billing method for vehicle charging provided by an embodiment of the present application;

FIG. 4 is a fourth schematic diagram of an implementation process of a billing method for vehicle charging provided by an embodiment of the present application;

FIG. 5 is a fifth schematic diagram of an implementation process of a billing method for vehicle charging provided by an embodiment of the present application;

FIG. 6 is a sixth schematic diagram of an implementation process of a billing method for vehicle charging provided by an embodiment of the present application;

FIG. 7 is a seventh schematic diagram of an implementation process of a billing method for vehicle charging provided by an embodiment of the present application;

FIG. 8 is an eighth schematic diagram of an implementation process of a billing method for vehicle charging provided by an embodiment of the present application;

FIG. 9 is a schematic structural diagram of a composition of a billing apparatus for vehicle charging provided by an embodiment of the present application; and

FIG. 10 is a schematic diagram of a hardware entity of a billing device for vehicle charging provided by an embodiment of the present application.

## DETAILED DESCRIPTION

In order to make the objects, technical solutions and advantages of the present application clearer, the technical solutions of the present application are further elaborated in detail below in combination with the accompanying drawings and embodiments, the described embodiments should not be regarded as limitations of the present application, and all other embodiments obtained by persons of ordinary skills in the art without making creative efforts fall within the protection scope of the present application.

In the following description, "some embodiments" are involved, which describe a subgroup of all possible embodiments, but it is to be understood that "some embodiments" may be the same or different subsets of all possible embodiments and may be combined with each other without conflict.

The terms "first/second/third" are involved only to differentiate between similar objects and do not represent a particular ordering of objects, and it is to be understood that "first/second/third" may be interchanged in a particular order or sequence where permitted to enable the embodiments of the present application described herein to be implemented in a particular order or sequence.

Unless otherwise defined, all technical and scientific terms used herein have the same meanings as those commonly understood by those skilled in the art to which the present application belongs. The terms used herein are merely for the purpose of describing the present application, but are not intended to limit the present application.

At present, charging piles can be divided into slow charging piles, fast charging piles and super charging piles according to their charging power. Because the charging power of the fast charging pile and the super charging pile is higher, the charging time of the fast charging pile and the super charging pile is often shorter. In other words, the fast charging pile and the super charging pile have higher charging timeliness. However, when charging by the fast charging pile and the super charging pile with higher charging timeliness is billed in the related art, the focus is often only on a charging electricity quantity, for example, a charging cost is calculated based on the charging electricity quantity and an electricity quantity unit price. It can be seen that a billing strategy in the related art does not take the charging characteristic of the higher charging timeliness of the fast charging pile and the super charging pile into account, resulting in a problem of inaccurate billing.

In order to solve the problem of inaccurate billing in the related art, an embodiment of the present application provides a billing method for vehicle charging, which can be applied to a charging platform. The charging platform is configured to control a charging device to charge a vehicle. The charging device includes at least a super charging pile and a fast charging pile. In some embodiments, the above billing method can be applied to an electronic device in the charging platform. The electronic device includes but is not limited to a fixed device and/or a mobile device. For example, the fixed device includes but is not limited to: a personal computer (PC) or a server, etc. The server can be a cloud server or a common server.

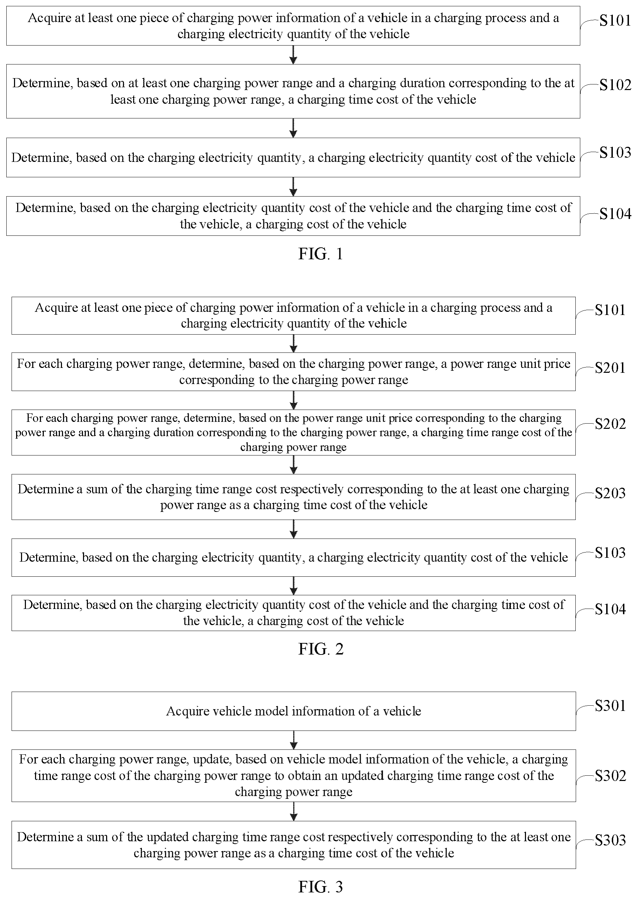

FIG. 1 is a first schematic diagram of an implementation process of a billing method for vehicle charging provided by an embodiment of the present application. As shown in FIG. 1 , the billing method for vehicle charging can be implemented through step S101 to step S104:

Step S101: Acquire at least one piece of charging power information of a vehicle in a charging process and a charging electricity quantity of the vehicle.

Here, the charging power information includes a charging power range of the vehicle in the charging process and a charging duration for charging in the charging power range. The charging power range can be determined by means of a real-time charging power of the vehicle in the charging process. The charging electricity quantity of the vehicle refers to the quantity of electricity output by the charging device controlled by the charging platform when the vehicle is fully charged.

In the embodiment of the present application, the charging platform can monitor in real time the real-time charging power used by the charging device when charging the vehicle. After the vehicle is fully charged, multiple real-time charging powers of the vehicle in the charging process, and a charging duration corresponding to each real-time charging power are acquired. Then, the at least one charging power range is determined based on the multiple real-time charging powers. Then, based on the charging duration of the real-time charging power in each charging power range, the charging duration corresponding to each charging power range is obtained.

Exemplarily, the multiple real-time charging powers of the vehicle in the charging process include 50 kw, 100 kw, 150 kw, 200 kw, 250 kw and 300 kw, where: the charging duration corresponding to 50 kw and 100 kw is 1 minute, the charging duration corresponding to 150 kw is 2 minutes, the charging duration corresponding to 200 kw and 250 kw is 3 minutes, and the charging duration corresponding to 300 kw is 4 minutes. Then the charging power ranges may include: a charging power range 1: 0 to 100 kw, a charging power range 2: 100 kw to 200 kw, and a charging power range 3: 200 kw to 300 kw. The charging duration corresponding to the charging power range 1 is the charging duration corresponding to 50 kw (1 minute) + the charging duration corresponding to 100 kw (1 minute) = 2 minutes, the charging duration corresponding to the charging power range 2 is the charging duration corresponding to 150 kw (2 minutes) + the charging duration corresponding to 200 kw (3 minutes) = 5 minutes, and the charging duration corresponding to the charging power range 3 is the charging duration corresponding to 250 kw (3 minutes) + the charging duration corresponding to 300 kw (4 minutes) = 7 minutes.

In some embodiments, division of the charging power ranges may be pre-set, and a setting method may be consistent with a method of dividing slow charging, fast charging and super charging according to the charging power. That is to say, by acquiring the charging power range of the vehicle in the charging process and the charging duration corresponding to the charging power range, the charging method used by the vehicle during charging and the duration of the used charging method can be determined. In other embodiments, division of the charging power ranges may also be inconsistent with the method of dividing slow charging, fast charging and super charging according to the charging power. The embodiment of the present application does not limit the method of dividing the charging power ranges.

Step S102: Determine, based on the at least one charging power range and the charging duration respectively corresponding to the at least one charging power range, a charging time cost of the vehicle.

It is understandable that the fast charging pile and the super charging pile achieve shorter the charging time and has higher charging timeliness. In order to reflect the charging timeliness of the fast charging pile and the supercharging pile in a billing result, the charging time cost of the vehicle can be determined by means of the charging power range used by the vehicle in the charging process and the charging duration of the charging power range.

In the embodiment of the present application, a predetermined power range unit price corresponding to each charging power range can be acquired, the charging time range cost of each charging power range is determined according to the power range unit price corresponding to each charging power range and the charging duration corresponding to each charging power range, and then, a sum of the charging time range cost of the at least one charging power range is determined as the charging time cost of the vehicle. Different charging power ranges correspond to different power range unit prices. It is understandable that the greater an average charging power corresponding to the charging power range, the greater the amount of electricity provided by the charging pile provided for the vehicle per unit time, so the power range unit price corresponding to the charging power range will be higher. In this way, the charging time range cost corresponding to the charging power range can be determined based on a product of the charging time of the vehicle in the corresponding charging power range and the power range unit price.

Step S103: Determine, based on the charging electricity quantity, a charging electricity quantity cost of the vehicle.

In the embodiment of the present application, the charging electricity quantity cost of the vehicle may include an electricity quantity cost. A predetermined electricity quantity unit price may be acquired, and a product of the charging electricity quantity and the electricity quantity unit price is determined as the electricity quantity cost of the vehicle.

In some embodiments, the electricity quantity unit price may be a fixed value, such as 0.8 yuan /kWh. In other embodiments, the electricity quantity unit price may be a variable value related to a charging period. For example, when the vehicle is charged from 0:00 p.m. to 6:00 a.m., which is a period of off-peak electricity consumption, the electricity quantity unit price is lower, which can be 0.6 yuan/kWh; and when the vehicle is charged from 6:00 a.m. to 0:00 p.m., which is a period of peak electricity consumption, the electricity quantity unit price is higher, which can be 1 yuan/kWh.

In some embodiments, the charging electricity quantity cost may also include a charging service cost. A predetermined electricity quantity service unit price can be acquired, and a product of the charging electricity quantity and the electricity quantity service unit price is determined as the charging service cost of the vehicle.

In some embodiments, the electricity quantity service unit price may be a fixed value, such as 0.4 yuan /kWh. In other embodiments, the electricity quantity service unit price may be a variable value, in this case, the electricity quantity service unit price is related to the charging power of the vehicle, and the greater the charging power, the higher the electricity quantity service unit price.

Step S104: Determine, based on the charging electricity quantity cost of the vehicle and the charging time cost of the vehicle, a charging cost of the vehicle.

In the embodiment of the present application, a sum of the charging electricity quantity cost and the charging time cost of the vehicle may be determined as the charging cost of the vehicle.

In the embodiment of the present application, the charging time cost of the vehicle can be determined by means of the charging power range of the vehicle in the charging process and the charging duration corresponding to the charging power range, and the charging electricity quantity cost of the vehicle is determined by means of the charging electricity quantity of the vehicle. Finally, the charging time cost and the charging electricity quantity cost are determined as the charging cost of the vehicle. In this way, the final charging cost of the vehicle not only includes the charging electricity quantity cost, but also includes the charging time cost related to the charging power and charging time, so that the charging characteristic of the higher timeliness of the supercharging pile or the fast charging pile can be reflected in the charging cost of the vehicle, which can conform to an economic benefit model of the supercharging pile or the fast charging pile, thereby improving the accuracy of a final billing result of the vehicle

In some embodiments, as shown in FIG. 2, the above step S102 may also be implemented by means of step S201 to step S203:

Step S201: For each charging power range, determine, based on the charging power range, a power range unit price corresponding to the charging power range.

In the embodiment of the present application, a correspondence between different charging power ranges and different power range unit prices may be first acquired, and then a corresponding power range unit price is determined based on each charging power range of the vehicle from multiple correspondences. The power range unit price is positively correlated with the average power of the charging power range.

It is understandable that the fast charging pile and the super charging pile have the higher charging timeliness, in order to reflect the charging characteristic in the billing result, the greater the charging power used by the vehicle in the charging process, the higher the corresponding power range unit price.

Exemplarily, the correspondence between different charging power ranges and different power range unit prices can be: 0-100 kw corresponds to 0.2 yuan/minute, 100-200 kw corresponds to 0.3 yuan/minute, 200-300 kw corresponds to 0.4 yuan/minute, and 300-400 kw corresponds to 0.5 yuan/minute.

Step S202: For each charging power range, determine, based on the power range unit price corresponding to the charging power range and the charging duration corresponding to the charging power range, the charging time range cost of the charging power range.

In the embodiment of the present application, after the power range unit price corresponding to each charging power range of the vehicle is acquired, a product of the charging duration corresponding to the charging power range and the power range unit price corresponding to the charging power range can be determined as the charging time range cost corresponding to one charging power range.

Exemplarily, the charging power ranges include 0-100 kw, 100-200 kw and 200-300 kw, the charging duration of 0-100 kw is 2 minutes, the charging duration of 100-200 kw is 3 minutes, and the charging duration of 200-300 kw is 5 minutes; 0-100 kw corresponds to 0.2 yuan/minute, 100-200 kw corresponds to 0.3 yuan/minute, and 200-300 kw corresponds to 0.4 yuan/minute. The charging time range cost corresponding to 0-100 kw is $2\times0.2=0.4$ yuan; the charging time range cost corresponding to 100-200 kw is $3\times0.3=0.9$ yuan; and the charging time range cost corresponding to 200-300 kw is $5\times0.4=2$ yuan.

Step S203: Determine a sum of the charging time range cost of the at least one charging power range as the charging time cost of the vehicle.

Exemplarily, the charging power ranges of the vehicle in the charging process include 0-100 kw, 100-200 kw and 200-300 kw, and the charging time range cost corresponding to 0-100 kw is $2\times0.2=0.4$ yuan; the charging time range cost corresponding to 100-200 kw is $3\times0.3=0.9$ yuan; and the charging time range cost corresponding to 200-300 kw is $5\times0.4=2$ yuan, and then the charging time cost of the vehicle is 0.4+0.9+2=3.3 yuan.

In the embodiment of the present application, by determining the power range unit price corresponding to each charging power range, then the charging time range cost of each charging power range is determined based on the power range unit price and the charging duration corresponding to each charging power range. Finally, a sum of the charging time range costs of the various charging power ranges is determined as the charging time cost of the vehicle. In this way, the charging time cost of the vehicle is divided into different ranges according to the charging power of the vehicle. Different charging powers and durations for using the charging power correspond to different charging time range costs, so that the finally determined charging time cost can be more refined, thereby better reflecting the charging characteristic of the fast charging pile or the super charging pile.

In some embodiments, as shown in FIG. 3, the above method may also be implemented by means of step S301 and step S302, and the above step S203 may be implemented by means of step S303:

Step S301: Acquire vehicle model information of the vehicle.

Here, the vehicle model information is used to characterize a charging type that the vehicle can use in the charging process. Exemplarily, when the vehicle model information of the vehicle means a supercharging vehicle model, it means that the vehicle can be charged with a larger charging power, that is, the charging type is supercharging; and when the vehicle model information of the vehicle means an ordinary vehicle model, it means that the vehicle can be charged with a smaller charging power, that is, the charging type is ordinary charging.

In some embodiments, when the vehicle is communicatively connected to the charging platform, the charging platform can acquire the vehicle model information of the vehicle through a preset communication protocol.

Step S302: For each charging power range, update, based on the vehicle model information of the vehicle, the charging time range cost of the charging power range to obtain an updated charging time range cost of the charging power range.

In the embodiment of the present application, the power range unit price of each charging power range can be first updated according to the vehicle model information of the vehicle, and then the updated charging time range cost of each charging power range is determined based on the updated power range unit price of each charging power range and the corresponding charging duration. The power range unit price may be updated in a manner of acquiring an updating coefficient corresponding to the vehicle model information of the vehicle, and updating, based on the updating coefficient, the power range unit price of each charging power range. The updating coefficient is related to the average charging power used by the vehicle.

In the embodiment of the present application, when the vehicle model information of the vehicle means the supercharging vehicle model, it means that the vehicle can be charged in a supercharging manner in the charging process, so the average charging power used by the vehicle is relatively high, and then, a smaller updating coefficient, such as 0.8, can be determined. When the vehicle model information of the vehicle means the ordinary vehicle model, it means that the vehicle can be charged in an ordinary charging manner in the charging process, so the average charging power used by the vehicle is relatively low, and then, a larger updating coefficient, such as 1.1, can be determined.

In the embodiment of the present application, a product of the power range unit price of the charging power range and the corresponding updating coefficient may be determined as the updated power range unit price of the charging power range. A product of the updated power range unit price of the charging power range and the corresponding charging duration is determined as the updated charging time range cost of the charging power range.

It is understandable that the billing method provided by the embodiment of the present application is applied to the charging platform that can perform supercharging or fast charging. Therefore, when a vehicle of an ordinary vehicle model is charged on the charging platform, supercharging or fast charging with higher charging timeliness cannot be used due to the vehicle's own reasons. In this way, it can only continue to use a lower charging power for charging, a power range unit price corresponding to the lower charging power is also lower; and if an initial power range is continued to be used for billing, the economic benefit model of the supercharging pile or the fast charging pile cannot be met. Therefore, for vehicles of vehicle models that cannot be charged using supercharging or fast charging, it is necessary to increase the initial power range unit price. Similarly, for vehicles of supercharging vehicle models, because a higher charging power can be continuously used in the charging process, and a power range unit price corresponding to the higher charging power is also higher, a lower updating coefficient can be used to reduce the initial power range unit price.

Step S303: Determine a sum of the updated charging time range cost respectively corresponding to the at least one charging power ranges as the charging time cost of the vehicle

In the embodiment of the present application, after the charging time range cost of each charging power range is updated, the sum of the updated charging time range costs of all the charging power ranges may be determined as the charging time cost of the vehicle.

In the embodiment of the present application, the charging time range cost corresponding to each charging power range of the vehicle in the charging process can be adjusted according to the vehicle model information of the vehicle, thereby improving the flexibility of billing, so that the finally obtained charging cost not only reflects the charging characteristic of the charging pile, but also meets vehicle model characteristics of the vehicle.

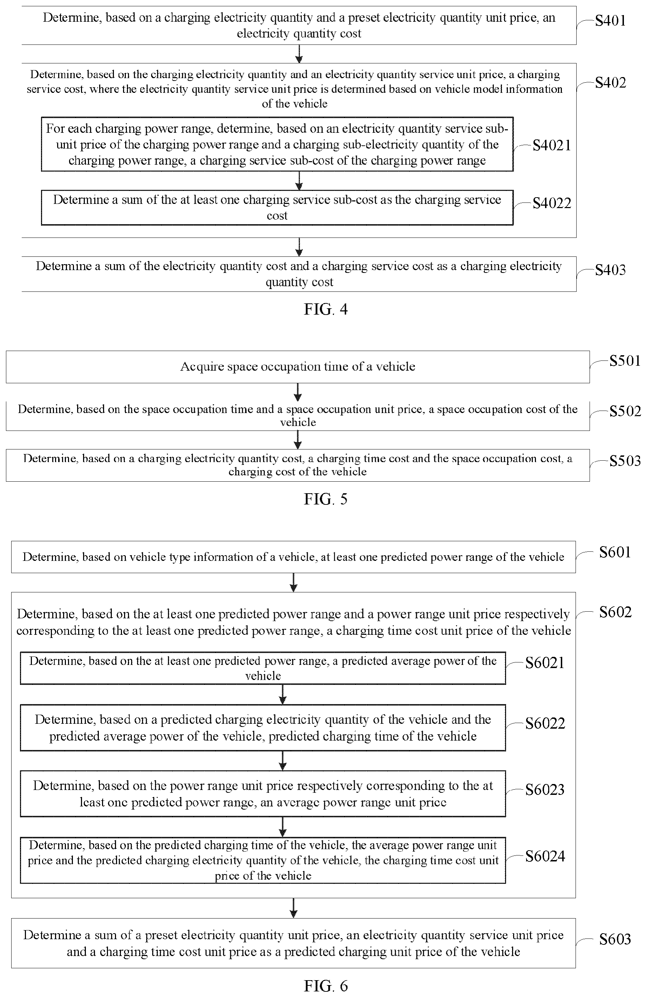

In some embodiments, as shown in FIG. 4, the above step S103 may be implemented by means of step 401 to step 403:

Step S401: Determine, based on the charging electricity quantity and a preset electricity quantity unit price, the electricity quantity cost.

In the embodiment of the present application, a product of the charging electricity quantity and the electricity quantity unit price may be determined as the electricity quantity cost. For example, when the electricity quantity unit price is 0.8 yuan/kWh and the charging electricity quantity of the vehicle is 50 kWh, the electricity quantity cost may be 40 yuan.

In some embodiments, the electricity quantity unit price corresponds to the charging period of the vehicle, and the electricity quantity unit price in the peak charging period is greater than the electricity quantity unit price in the off-peak charging period. For example, the electricity quantity unit price in the peak charging period may be 1 yuan/kWh, and the electricity quantity unit price in the off-peak charging period may be 0.6 yuan/kWh.

Step S402; Determine, based on the charging electricity quantity and the electricity quantity service unit price, the charging service cost, where the electricity quantity service unit price is determined based on the vehicle model information of the vehicle.

Step S403: Determine a sum of the electricity quantity cost and the charging service cost as the charging electricity quantity cost.

In the embodiment of the present application, the initial electricity quantity service unit price may be acquired first, then the updating coefficient is determined according to the vehicle model of the vehicle, a product of the updating coefficient and the initial electricity quantity service unit price is determined as the electricity quantity service unit price, and finally a product of the updated electricity quantity service unit price and the charging electricity quantity is determined as the charging service cost of the vehicle.

For example, the vehicle is a supercharging vehicle, the charging electricity quantity is 50 kWh, the initial electricity quantity service unit price is 0.4 yuan/kWh, the updating coefficient corresponding to the supercharging vehicle is 0.8, then the updated electricity quantity service unit price is 0.32, and the final charging service cost is $0.32 \times 50 = 16$ yuan.

In the embodiment of the present application, the electricity quantity service unit price is determined by means of the vehicle model information, and the charging service cost is determined by means of the electricity quantity service unit price and the charging electricity quantity. In this way, the charging service cost corresponding to a vehicle model can be determined according to vehicles in different models, so that the finally determined charging service cost is more matched with the vehicle model, thereby improving the accuracy of determining the charging service cost.

In some embodiments, as shown in FIG. 4, the charging electricity quantity includes a charging sub-electricity quantity respectively corresponding to the at least one charging power range; the electricity quantity service unit price includes an electricity quantity service sub-unit price respectively corresponding to the at least one charging power range; and the above step S402 can be implemented by means of step S4021 and step S4022:

Step S4021: For each charging power range, determine, based on the electricity quantity service sub-unit price of the charging power range and the charging sub-electricity quantity of the charging power range, the charging service sub-cost of the charging power range.

Step S4022: Determine a sum of the at least one charging service sub-cost as the charging service cost.

It is understandable that the charging pile uses multiple charging powers to charge the vehicle, ultimately allowing a battery of the vehicle to obtain the charging electricity quantity. In other words, the charging electricity quantity is related to the charging power. For example, when the vehicle just starts charging, the charging power range used is 0 to 100 kw, which lasts for 2 minutes, and the battery of the vehicle obtains 2 kWh of electricity; the charging power range of 200 kw to 300 kw lasts for 2 minutes, and the battery of the vehicle obtains 5 kWh of electricity; and the charging power range of 400 kw lasts for 6 minutes, and the battery of the vehicle obtains 40 kWh of electricity. Then the charging electricity quantity (47 kWh) includes 2 kWh of electricity corresponding to 0 to 100 kw, 5 kWh of electricity corresponding to 200 kw to 300 kw, and 40 kWh of electricity corresponding to 400 kw.

In the embodiment of the present application, the electricity quantity service sub-unit price corresponding to each charging power range is also different.

Continuing with the above example for description: the electricity quantity service sub-unit price of 0 to 100 kw may be 0.1 kWh/yuan, and the charging service sub-cost of 0 to 100 kw is $0.1 \times 2 = 0.2$ yuan; the electricity quantity service sub-unit price of 200 kw to 300 kw may be 0.2 kWh/yuan, and the charging service sub-cost of 200 kw to 300 kw is $0.2 \times 5 = 1$ yuan; and the electricity quantity service sub-unit price of 400 kw may be 0.4 kw/yuan, and the charging service sub-cost of 400 kw is $0.4 \times 40 = 16$ yuan. In the end, the charging service cost is 0.2+1+16=17.2 yuan.

In the embodiment of the present application, the charging service sub-cost of each charging power range is determined based on the electricity quantity service sub-unit price corresponding to each charging power range and the charging sub-electricity quantity corresponding to each charging power range. Finally, a sum of the charging service sub-costs of the various charging power ranges is determined as the charging service cost of the vehicle. In this way, the charging electricity quantity of the vehicle is divided into different ranges according to the charging power of the vehicle, and the charging sub-electricity quantities corresponding to different charging powers correspond to different charging service sub-costs, so that the finally determined charging service cost can be more refined, thereby better reflecting the charging characteristic of the fast charging pile or the super charging pile.

In some embodiments, as shown in FIG. 5, the above method may also be implemented by means of step S501 and step S502, and correspondingly, the above step S104 may also be implemented by means of step S503.

Step S501: Acquire space occupation time of the vehicle.

Here, the space occupation time is time during which the vehicle is in the charging platform, but is not charged. The space occupation time can include time before the vehicle is charged and time after the vehicle is charged.

Step S502: Determine, based on the space occupation time and a space occupation unit price, a space occupation cost of the vehicle.

In the embodiment of the present application, a product of the space occupation time and the space occupation unit price may be determined as the space occupation cost of the vehicle. The space occupation unit price may be preset. Exemplarily, the space occupation unit price may be 0.32 minute/yuan.

It is understandable that the fast charging pile and the super charging pile have the charging characteristic of the higher charging timeliness. The charging characteristic can only be reflected in the charging process. Therefore, in order to improve the charging efficiency and to be able to exert the charging characteristic of the fast charging pile and the super charging pile as quickly as possible, the space occupation cost of the vehicle is determined based on the space occupation time of the vehicle in the period when the vehicle is not charged.

Step S503: Determine, based on the charging electricity quantity cost, the charging time cost and the space occupation cost, the charging cost of the vehicle.

In the embodiment of the present application, a sum of the charging electricity quantity cost, the charging time cost and the space occupation cost may be determined as the charging cost of the vehicle.

In the embodiment of the present application, the space occupation cost of the vehicle can be determined by determining the space occupation time of the vehicle, so that the vehicle can enter the charging process or leave the charging platform as quickly as possible, thereby improving charging efficiency.

In some embodiments, as shown in FIG. 6, the above method may also be implemented by means of step S601 to step S603:

Step S601: Determine, based on vehicle type information of the vehicle, at least one predicted power range of the vehicle.

In the embodiment of the present application, step S601 to step S603 may be performed before the vehicle is charged.

Here, the predicted power range is a power range that the vehicle is likely to use in the charging process. It is understandable that the power range used by the vehicle in the charging process is related to whether the vehicle adopts a charging type, and the charging type is related to the vehicle type information of the vehicle. Exemplarily, when the vehicle is a supercharging vehicle, the charging type is most likely supercharging, and then the power range used by the vehicle in the charging process is 0 to 400 kw. When the vehicle is an ordinary vehicle, the charging type is most likely ordinary charging, and the power range used by the vehicle in the charging process is 0 to 200 kw. Therefore, at least one predicted power range of the vehicle can be predicted by means of the vehicle type information of the vehicle.

Step S602: Determine, based on the at least one predicted power range and the power range unit price corresponding to the at least one predicted power range, the charging time cost unit price of the vehicle.

Step S603: Determine a sum of the preset electricity quantity unit price, the electricity quantity service unit price and the charging time cost unit price as a predicted charging unit price of the vehicle.

It is understandable that the charging cost of the vehicle determined based on the billing method provided by the embodiment of the present application consists of the charging time cost and the charging electricity quantity cost, and the charging time cost is determined based on the charging power of the vehicle and the corresponding charging duration. Therefore, in order to enable a user to predict the cost for this charging before charging, the embodiment of the present application determines the charging time cost unit price so that the final predicted charging unit price includes the charging time cost, and the user can more accurately predict the cost for this charging after obtaining the predicted charging unit price.

In some embodiments, a human-computer interaction interface of the charging platform includes a unit price display control for displaying the predicted charging unit price of the vehicle. After the user triggers the unit price display control, the charging platform can display the predicted charging unit price of the vehicle on the human-computer interaction interface in response to the triggering operation for the unit price display control. Therefore, after the user obtains the predicted charging unit price, the user can predict, based on the predicted charging unit price, the charging cost for this charging.

In the embodiment of the present application, the at least one predicted power range of the vehicle is first determined based on the vehicle type information of the vehicle, and then the charging time cost unit price of the vehicle is determined by means of the predicted power range and the power range unit price of the predicted power range. Finally, a sum of the preset electricity quantity unit price, the electricity quantity service unit price and the charging time cost unit price is determined as the predicted charging unit price of the vehicle. In this way, the display unit of the charging unit price of the vehicle can be unified, so that after the user triggers the unit price display control of the human-computer interaction interface of the charging platform, the predicted charging unit price can be displayed on the human-computer interaction interface, and the user can more accurately predict, based on the predicted charging unit price, the final charging cost.

In some embodiments, the above step S602 may be implemented by means of step S6021 to step S6024:

Step S6021: Determine, based on the at least one predicted power range, a predicted average power of the vehicle.

In the embodiment of the present application, an average value of a minimum charging power and a maximum charging power in the at least one predicted power range may be determined as the predicted average power of the vehicle. Exemplarily, if the at least one predicted power range includes 0-100 kw, 100-200 kw, 200-300 kw, and 300-400 kw, the predicted average power is 200 kw.

Step S6022: Determine, based on the predicted charging electricity quantity of the vehicle and the predicted average power of the vehicle, the predicted charging time of the vehicle.

In the embodiment of the present application, the predicted charging electricity quantity of the vehicle is related to the capacity of a battery pack of the vehicle. When the vehicle is communicatively connected to the charging platform, the charging platform can acquire the predicted charging electricity quantity of the vehicle. After the predicted charging electricity quantity of the vehicle is acquired, a quotient of the predicted charging electricity quantity and the predicted average power may be determined as the predicted charging time of the vehicle. For example, the predicted charging electricity quantity of the vehicle is 50 kWh, the predicted average power of the vehicle is 200 kw, and then the predicted charging time of the vehicle is 50 kWh/200 kw=15 minutes.

Step S6023: Determine, based on the power range unit price respectively corresponding to the at least one predicted power range, an average power range unit price.

It is understandable that different predicted power ranges correspond to different power range unit prices. The correspondence between the different predicted power ranges and the different power range unit prices is consistent with the correspondence between different charging power ranges and different power range unit prices in the above embodiment.

In the embodiment of the present application, an average number of the power range unit price of the at least one predicted power region may be determined as the average power range unit price. Exemplarily, at least one predicted power region includes 0-100 kw, 100-200 kw, 200-300 kw and 300-400 kw, the corresponding power range unit prices are 0.2 yuan/minute, 0.3 yuan/minute, 0.4 yuan/minute and 0.5 yuan/minute, respectively, and then the average power range unit price is (0.2+0.3+0.4+0.5)/4=0.35 yuan/minute.

Step S6024: Determine, based on the predicted charging time of the vehicle, the average power range unit price and the predicted charging electricity quantity of the vehicle, the charging time cost unit price of the vehicle.

In the embodiment of the present application, the predicted range cost can be first determined based on the predicted charging time of the vehicle and the average power range unit price, where a product of the predicted charging time and the average power range unit price may be determined as the predicted range cost, and then a quotient of the predicted range cost and the predicted charging electricity quantity is determined as the charging time cost unit price.

It is understandable that the predicted range cost can represent the predicted charging time range cost when the vehicle is charged in the average power range. Then, in order to unify the unit with the electricity quantity unit price and the electricity quantity service unit price (i.e., yuan/kWh), the predicted range cost can be divided by the predicted charging electricity quantity to obtain the predicted range cost per kilowatt-hour of electricity, i.e., the charging time cost unit price.

In the embodiment of the present applications, the predicted average power of the vehicle is determined by means of the predicted power range; the predicted charging time of the vehicle is determined by means of the predicted charging electricity quantity of the vehicle and the predicted average power of the vehicle; the average power range unit price is determined by means of the power range unit price of the predicted power range; and the charging time cost unit price of the vehicle is determined by means of the predicted charging time of the vehicle, the average power range unit price and the predicted charging electricity quantity of the vehicle. In this way, units of the charging time cost unit price, the electricity quantity unit price and the electricity quantity service unit price can be unified, so that a sum of the charging time cost unit price, the electricity quantity unit price and the electricity quantity service unit price can be used as the predicted charging unit price of the vehicle.

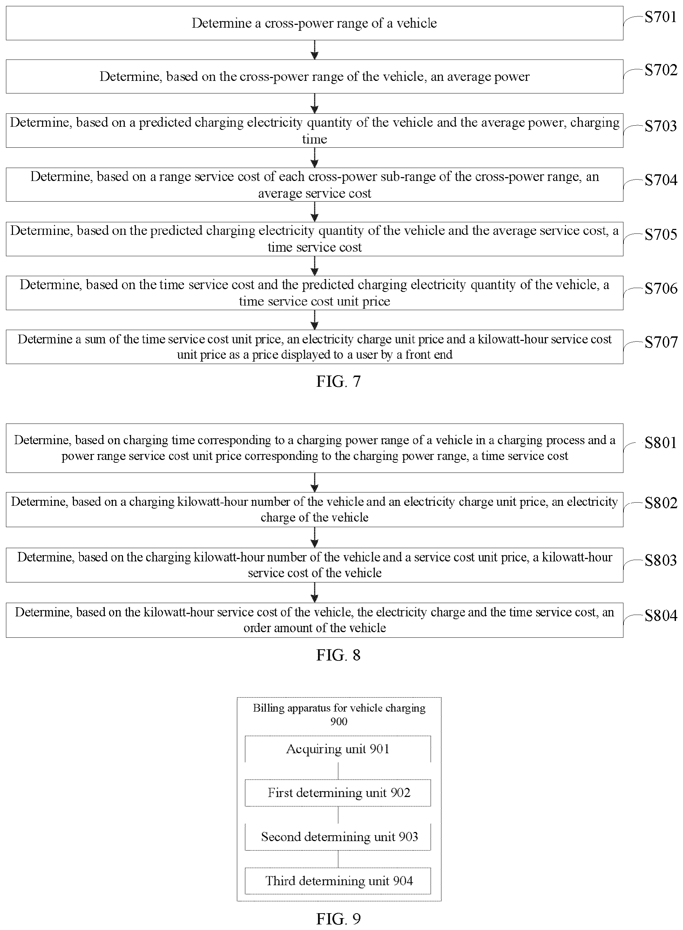

In some embodiments, as shown in FIG7, the above billing method can also be implemented by means of the following steps:

Step S701: Determine a cross-power range of the vehicle.

Step S702: Determine, based on the cross-power range of the vehicle, an average power.

In the embodiment of the present application, the average power is realized by formula (1):

$$\text{The average power} = \frac{\text{A sum of a maximum value and a minimum value of the cross−power range}}{2}$$

formula (1).

Step S703: Determine, based on the predicted charging electricity quantity of the vehicle and the average power, charging time.

In the embodiment of the present application, the charging time is realized by formula (2):

$$\text{The charging time} = \frac{\text{The predicted charging electricity quantity}}{\text{The average power}} \qquad \text{formula (2).}$$

Step S704: Determine, based on a range service cost of each cross-power sub-range of the cross-power range, an average service cost.

In the embodiment of the present application, the average service cost is realized by formula (3):

$$\text{The average service cost} = \frac{\text{A sum of the range service costs of the various cross}-\text{power sub}-\text{ranges}}{\text{A number of the cross}-\text{power sub}-\text{ranges}}$$

$$\text{formula (3).}$$

Step S705: Determine, based on the predicted charging electricity quantity of the vehicle and the average service cost, time service cost.

In the embodiment of the present application, the time service cost is realized by formula (4):

$$\text{The time service cost} = \text{the predicted charging electricity quantity} \times$$

$$\text{the average service cost} \qquad \text{formula (4).}$$

Step S706: Determine, based on the time service cost and the predicted charging electricity quantity of the vehicle, a time service cost unit price.

In the embodiment of the present application, the time service cost unit price is realized by formula (5):

$$\text{The time service cost unit price} = \frac{\text{The time service cost}}{\text{The predicted charging electricity quantity}} \qquad \text{formula (5).}$$

Step S707: Determine a sum of the time service cost unit price, an electricity charge unit price and a kilowatt-hour service cost unit price as a price displayed to the user by a front end.

In some embodiments, as shown in FIG. 8, the above billing method may also be implemented by means of the following step:

Step S801: Determine, based on the charging time corresponding to the charging power range of the vehicle in the charging process and a power range service cost unit price corresponding to the charging power range, the time service cost.

In the embodiment of the present application, the time service cost is realized by formula (6):

$$\text{The time service cost} = \sum_{i=1}^{n} \text{The charging time}_i * \text{The power range service cost unit price}_i$$

$$\text{formula (6);}$$

Where, n is the total number of the charging power ranges, and n is a positive integer.

Step S802: Determine, based on a charging kilowatt-hour number of the vehicle and the electricity charge unit price, an electricity charge of the vehicle.

In the embodiment of the present application, the electricity charge is realized by formula (7):

$$\text{The electricity charge} = \text{the charging kilowatt} - \text{hour number} *$$

$$\text{the electricity charge unit price} \qquad \text{formula (7).}$$

Step S803: Determine, based on the charging kilowatt-hour number of the vehicle and a service cost unit price, a kilowatt-hour service cost of the vehicle.

In the embodiment of the present application, the electricity charge is realized by formula (8):

$$\text{The kilowatt} - \text{hour service cost} = \text{the charging kilowatt} - \text{hour number} \ast$$
$$\text{the service cost unit price} \hspace{4cm} \text{formula (8)}.$$

Step S804: Determining, based on the kilowatt-hour service cost of the vehicle, the electricity charge and the time service cost, an order amount of the vehicle.

In the embodiment of the present application, the order amount is realized by formula (9):

$$\text{The order amount} = \text{The electricity charge} + \text{the kilowatt-hour service cost} + \text{the time service cost}$$
$$\text{formula (9)}.$$

FIG. 9 is a schematic structural diagram of a composition of a billing apparatus for vehicle charging provided by an embodiment of the present application. As shown in FIG. 9, the billing apparatus for vehicle charging 900 includes: an acquiring unit 901, a first determining unit 902, a second determining unit 903, and a third determining unit 904, where:

The acquiring unit 901 is configured to acquire at least one piece of charging power information of a vehicle in a charging process and a charging electricity quantity of the vehicle, the charging power information including a charging power range and a charging duration corresponding to the charging power range;

The first determining unit 902 is configured to determine, based on the at least one charging power range and the charging duration respectively corresponding to the at least one charging power range, a charging time cost of the vehicle;

The second determining unit 903 is configured to determine, based on the charging electricity quantity, a charging electricity quantity cost of the vehicle;

The third determining unit 904 is configured to determine, based on the charging electricity quantity cost of the vehicle and the charging time cost of the vehicle, a charging cost of the vehicle.

In some embodiments, the first determining unit 902 is configured to, for each charging power range, determine, based on the charging power range, a power range unit price corresponding to the charging power range; for each charging power range, determine, based on the power range unit price corresponding to the charging power range and the charging duration corresponding to the charging power range, a charging time range cost of the charging power range: and determine, a sum of the charging time range cost respectively corresponding to the at least one charging power range as the charging time cost of the vehicle.

In some embodiments, the billing apparatus for vehicle charging 900 further includes an updating unit, where the updating unit is configured to acquire vehicle model information of the vehicle, the vehicle model information being used to characterize a charging type that the vehicle can use in the charging process: for each charging power range, update, based on the vehicle model information of the vehicle, the charging time range cost of the charging power range to obtain an updated charging time range cost of the charging power range; and determine, a sum of the updated charging time range cost respectively corresponding to the at least one charging power range as the charging time cost of the vehicle.

In some embodiments, the second determining unit 903 is configured to determine, based on the charging electricity quantity and a preset electricity quantity unit price, an electricity quantity cost; determine, based on the charging electricity quantity and an electricity quantity service unit price, a charging service cost, the electricity quantity service unit price being determined based on the vehicle model information of the vehicle; and determine a sum of the electricity quantity cost and the charging service cost as the charging electricity quantity cost.

In some embodiments, the charging electricity quantity includes a charging sub-electricity quantity respectively corresponding to the at least one charging power range. The electricity quantity service unit price includes an electricity quantity service sub-unit price respectively corresponding to the at least one charging power range. The second determining unit 903 is configured to, for each charging power range, determine, based on the electricity quantity service sub-unit price of the charging power range and the charging sub-electricity quantity corresponding to the charging power range, a charging service sub-cost of the charging power range; and determine a sum of the at least one charging service sub-cost as the charging service cost.

In some embodiments, the billing apparatus for vehicle charging 900 further includes a fourth determining unit, where the fourth determining unit is used to acquire space occupation time of the vehicle, the space occupation time being the time during which the vehicle is in a charging platform but is not charged; and determine, based on the space occupation time and a space occupation unit price, a space occupation cost of the vehicle; and the third determining unit 904 is configured to determine, based on the charging electricity quantity cost, the charging time cost and the space occupation cost, a charging cost of the vehicle.

In some embodiments, the billing apparatus for vehicle charging 900 further includes a fifth determining unit, where the fifth determining unit is configured to determine, based on vehicle type information of the vehicle, at least one predicted power range of the vehicle; determine, based on the at least one predicted power range and a power range unit price respectively corresponding to the at least one predicted power range, a charging time cost unit price of the vehicle;

and determine a sum of a preset electricity quantity unit price, an electricity quantity service unit price and the charging time cost unit price as a predicted charging unit price of the vehicle.

In some embodiments, the fifth determining unit is further configured to determine, based on the at least one predicted power range, a predicted average power of the vehicle; determine, based on a predicted charging electricity quantity of the vehicle and the predicted average power of the vehicle, predicted charging time of the vehicle; determine, based on the power range unit price respectively corresponding to the at least one predicted power range, an average power range unit price; and determine, based on the predicted charging time of the vehicle, the average power range unit price and the predicted charging electricity quantity of the vehicle, the charging time cost unit price of the vehicle.

The description of the above apparatus embodiment is similar to the description of the above method embodiments and has similar beneficial effects as the method embodiments. In some embodiments, the functions or modules included in the apparatus provided in the embodiment of the present application can be used to execute the method described in the above method embodiments. For technical details not disclosed in the apparatus embodiments of the present application, please refer to the description of the method embodiments of the present application for understanding.

It should be noted that in the embodiments of the present application, if the above data processing method is implemented in a form of a software function module and is sold or used as a stand-alone product, the above data processing method may also be stored in a computer-readable storage medium. Based on such understanding, the technical solutions of the embodiments of the present application essentially, or the part contributing to the prior art may be embodied in the form of a software product which is stored in a storage medium and includes some instructions for causing a computer device (which may be, e.g., a personal computer, a server, or a network device) to execute all or some of steps of the method according to the embodiments of the present application. The aforementioned storage medium includes various media that can store program codes, such as a USB drive, a mobile hard disk, a read only memory (ROM), a magnetic disk or a compact disc. Thus, the embodiments of the present application are not limited to any specific hardware, software or firmware, or any combination of hardware, software and firmware.

An embodiment of the present application provides a computer device, including: a memory and a processor, where the memory stores computer programs capable of running on the processor, and the processor, when executing the program, implements some or all steps in the above method.

An embodiment of the present application provides a computer-readable storage medium, storing computer programs therein, wherein the computer program, when executed by a processor, implements some or all steps in the above method. The computer-readable storage medium may be transient or non-transient.

An embodiment of the present application provides a computer program, including a computer-readable code, where when the computer-readable code is run in a computer device, a processor in the computer device executes some or all steps for implementing the above method.

An embodiment of the present application provides a computer program product, including a non-transient computer-readable storage medium storing computer programs, where the computer program, when read and executed by a computer, implements some or all steps in the above method. The computer program product may be implemented in hardware, software or a combination thereof. In some embodiments, the computer program product is specifically embodied as a computer storage medium. In some other embodiments, the computer program product is specifically embodied as a software product, such as a software development kit (SDK) and the like.

It should be pointed out here that the above description of the various embodiments tends to emphasize the differences between the various embodiments, and the same or similar aspects thereof can be referenced to each other. The above description of the device, storage medium, computer program and computer program product embodiments is similar to the above description of the method embodiments and has similar beneficial effects as the method embodiments. For technical details not disclosed in the device, storage medium, computer program and computer program product embodiments of the present application, please refer to the description of the method embodiments of the present application for understanding.

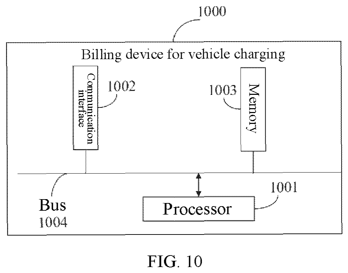

FIG. 10 is a schematic diagram of a hardware entity of a billing device for vehicle charging in an embodiment of the present application. As shown in FIG. 10 , the hardware entity of the billing device for vehicle charging 1000 includes: a processor 1001, a communication interface 1002 and a memory 1003, where:

The processor 1001 generally controls the overall operation of the billing device for vehicle charging 1000, and the overall operation may be to implement the billing method for vehicle charging provided in the embodiment of the present application, for example, the methods shown in FIG. 1 to FIG. 8.

The communication interface 1002 enables a computer device to communicate with other terminals or servers through a network.

The memory 1003 is configured to store instructions and applications executable by the processor 1001, and can also cache data to be processed or processed by the processor 1001 and various modules in the billing device for vehicle charging 1000 (for example, image data, audio data, voice communication data and video communication data), which can be implemented through a flash memory or a random access memory (RAM). Data can be transmitted between the processor 1001, the communication interface 1002 and the memory 1003 via a bus 1004.

An embodiment of the present application provides a computer storage medium, which stores one or more programs, where the one or more programs can be executed by one or more processors to implement steps of the billing method for vehicle charging as described in any of the above embodiments.

It should be pointed out here that the above description of the storage medium and device embodiments is similar to the above description of the method embodiments and has similar beneficial effects as the method embodiments. For technical details not disclosed in the storage medium and device embodiments of the present application, please refer to the description of the method embodiments of the present application for understanding.

The above processor can be at least one of an application specific integrated circuit (ASIC), a digital signal processor (DSP), a digital signal processing device (DSPD), a programmable logic device (PLD), a field programmable gate array (FPGA), a central processing unit (CPU), a controller, a microcontroller, and a microprocessor. It is understandable that the electronic device that implements the above processor function may also be other electronic devices, and the embodiments of the present application do not specifically limit this.

The above computer storage medium/memory can be a read-only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, a compact disk, or a compact disc read-only memory (CD-ROM) and the like, and can also be various terminals including one or any combination of the above memories, such as a mobile phone, a computer, a tablet device, a personal digital assistant, etc.

It should be understood that references throughout the specification to "one embodiment" or "an embodiment" imply that specific features, structures, or characteristics related to the embodiment are included in at least one embodiment of the present application. Thus, "in one embodiment" or "in an embodiment" that appears throughout the specification may not necessarily refer to the same embodiment. In addition, these specific features, structures, or characteristics may be combined in one or more embodiments in any suitable manner. It should be understood that in the various embodiments of the present application, the size of the serial numbers of the above steps/processes does not imply the order of execution, and the execution order of each step/process should be determined by its function and internal logic, and should not constitute any limitations on the implementation process of the embodiment of the present application. The above serial numbers of the embodiments of the present application are only for description and do not represent the advantages and disadvantages of the embodiments.

It should be noted that terms "including", "containing", or any other variations herein are intended to cover non-exclusive inclusion, such that a process, method, item or apparatus that includes a series of elements not only includes those elements, but also other elements that are not explicitly listed, or further includes elements inherent in such a process, method, item or apparatus. Without more limitations, elements defined by a statement "including one" do not exclude the existence of other identical elements in the process, method, item or apparatus that includes the elements.

The foregoing descriptions are merely embodiments of the present application, but are not intended to limit the protection scope of the present application. Any variation or replacement readily figured out by persons skilled in the art within the technical scope disclosed in the present application shall fall within the protection scope of the present application.

**Claims**

1. A billing method for vehicle charging, comprising:

> acquiring at least one piece of charging power information of a vehicle during a charging process and a charging electricity quantity of the vehicle, the charging power information comprising a charging power range and a charging duration corresponding to the charging power range;
> determining, based on the at least one charging power range and the charging duration respectively corresponding to the at least one charging power range, a charging time cost of the vehicle;
> determining, based on the charging electricity quantity, a charging electricity quantity cost of the vehicle;
> determining, based on the charging electricity quantity cost of the vehicle and the charging time cost of the vehicle, a charging cost of the vehicle;
> before the vehicle is charged, the billing method further comprising:
>
>> determining, based on vehicle type information of the vehicle, at least two predicted power ranges of the vehicle;
>> determining, based on the at least two predicted power ranges and power range unit prices respectively corresponding to the at least two predicted power ranges, a charging time cost unit price of the vehicle; and

determining a sum of a preset electricity quantity unit price, an electricity quantity service unit price and the charging time cost unit price as a predicted charging unit price of the vehicle.

2. The billing method according to claim 1, wherein the determining, based on the at least one charging power range and the charging duration respectively corresponding to the at least one charging power range, a charging time cost of the vehicle comprises:

for each of the charging power ranges, determining, based on the charging power range, a power range unit price corresponding to the charging power range;

for each of the charging power ranges, determining, based on the power range unit price corresponding to the charging power range and the charging duration corresponding to the charging power range, a charging time range cost of the charging power range; and

determining a sum of the charging time range cost respectively corresponding to the at least one charging power range as the charging time cost of the vehicle.

3. The billing method according to claim 2, wherein the method further comprises:

acquiring vehicle model information of the vehicle, the vehicle model information being used to represent a charging type that the vehicle is capable of adopting during the charging process; and

for each of the charging power ranges, updating, based on the vehicle model information of the vehicle, the charging time range cost of the charging power range to obtain an updated charging time range cost of the charging power range; and

the determining a sum of the charging time range cost respectively corresponding to the at least one charging power range as the charging time cost of the vehicle comprises:

determining a sum of the updated charging time range cost respectively corresponding to the at least one charging power range as the charging time cost of the vehicle.

4. The billing method according to any one of claims 1 to 3, wherein the determining, based on the charging electricity quantity, a charging electricity quantity cost of the vehicle comprises:

determining, based on the charging electricity quantity and a preset electricity quantity unit price, an electricity quantity cost;

determining, based on the charging electricity quantity and the electricity quantity service unit price, a charging service cost, the electricity quantity service unit price being determined based on vehicle model information of the vehicle; and

determining a sum of the electricity quantity cost and the charging service cost as the charging electricity quantity cost.

5. The billing method according to claim 4, wherein the charging electricity quantity comprises a charging sub-electricity quantity respectively corresponding to the at least one charging power range;

the electricity quantity service unit price comprises an electricity quantity service sub-unit price respectively corresponding to the at least one charging power range; and

the determining, based on the charging electricity quantity and the electricity quantity service unit price, a charging service cost comprises:

for each of the charging power ranges, determining, based on the electricity quantity service sub-unit price of the charging power range and the charging sub-electricity quantity corresponding to the charging power range, a charging service sub-cost of the charging power range; and

determining a sum of the at least one charging service sub-cost as the charging service cost.

6. The billing method according to any one of claims 1 to 5, wherein the method further comprises:

acquiring space occupation time of the vehicle, the space occupation time being the time during which the vehicle is in a charging platform but is not charged;

determining, based on the space occupation time and a space occupation unit price, a space occupation cost of the vehicle; and

the determining, based on the charging electricity quantity cost of the vehicle and the charging time cost of the vehicle, a charging cost of the vehicle comprises:
determining, based on the charging electricity quantity cost, the charging time cost and the space occupation cost, the charging cost of the vehicle.

7. The billing method according to any one of claims 1 to 6, wherein the determining, based on the at least one predicted power range and the power range unit price respectively corresponding to the at least one predicted power range, the charging time cost unit price of the vehicle comprises:

determining, based on the at least one predicted power range, a predicted average power of the vehicle;
determining, based on a predicted charging electricity quantity of the vehicle and the predicted average power of the vehicle, predicted charging time of the vehicle;
determining, based on the power range unit price respectively corresponding to the at least one predicted power range, an average power range unit price; and
determining, based on the predicted charging time of the vehicle, the average power range unit price and the predicted charging electricity quantity of the vehicle, the charging time cost unit price of the vehicle.

8. The billing method according to claim 7, wherein the determining, based on the at least one predicted power range, a predicted average power of the vehicle comprises:
determining an average value of a minimum charging power and a maximum charging power in the at least one predicted power range as the predicted average power of the vehicle; and
the determining, based on a predicted charging electricity quantity of the vehicle and the predicted average power of the vehicle, predicted charging time of the vehicle comprises:
determining a quotient of the predicted charging electricity quantity and the predicted average power as the predicted charging time of the vehicle.

9. The billing method according to claim 7 or 8, wherein the determining, based on the power range unit price respectively corresponding to the at least one predicted power range, an average power range unit price comprises:
determining an average number of the power range unit price respectively corresponding to the at least one predicted power region as the average power range unit price.

10. The billing method according to any one of claims 7 to 9, wherein the determining, based on the predicted charging time of the vehicle, the average power range unit price and the predicted charging electricity quantity of the vehicle, the charging time cost unit price of the vehicle comprises:

determining, based on the predicted charging time of the vehicle and the average power range unit price, a predicted range cost; and
determining a quotient of the predicted range cost and the predicted charging electricity quantity of the vehicle as the charging time cost unit price.

11. A billing apparatus for vehicle charging, comprising:

an acquiring unit, configured to acquire at least one piece of charging power information of a vehicle during a charging process and a charging electricity quantity of the vehicle, the charging power information comprising a charging power range and a charging duration corresponding to the charging power range;
a first determining unit, configured to determine, based on the at least one charging power range and the charging duration respectively corresponding to the at least one charging power range, a charging time cost of the vehicle;
a second determining unit, configured to determine, based on the charging electricity quantity, a charging electricity quantity cost of the vehicle;
a third determining unit, configured to determine, based on the charging electricity quantity cost of the vehicle and the charging time cost of the vehicle, a charging cost of the vehicle; and
a fifth determining unit, configured to determine, based on vehicle type information of the vehicle, at least two predicted power ranges of the vehicle; determine, based on the at least two predicted power ranges and power range unit prices respectively corresponding to the at least two predicted power ranges, a charging time cost unit price of the vehicle; and determine a sum of a preset electricity quantity unit price, an electricity quantity service unit price and the charging time cost unit price as a predicted charging unit price of the vehicle.

12. The billing apparatus according to claim 11, wherein the first determining unit is further configured to:

for each of the charging power ranges, determine, based on the charging power range, a power range unit price corresponding to the charging power range;

for each of the charging power ranges, determine, based on the power range unit price corresponding to the charging power range and the charging duration corresponding to the charging power range, a charging time range cost of the charging power range; and

determine a sum of the charging time range cost respectively corresponding to the at least one charging power range as the charging time cost of the vehicle.

13. The billing apparatus according to claim 12, wherein the billing apparatus further comprises an updating unit;

the updating unit is configured to:

acquire vehicle model information of the vehicle, the vehicle model information being used to represent a charging type that the vehicle is capable of adopting during the charging process, and

for each of the charging power ranges, update, based on the vehicle model information of the vehicle, the charging time range cost of the charging power range to obtain an updated charging time range cost of the charging power range; and

the first determining unit is further configured to determine a sum of the updated charging time range cost respectively corresponding to the at least one charging power range as the charging time cost of the vehicle.

14. The billing apparatus according to any one of claims 11 to 13, wherein the second determining unit 903 is configured to:

determine, based on the charging electricity quantity and a preset electricity quantity unit price, an electricity quantity cost;

determine, based on the charging electricity quantity and the electricity quantity service unit price, a charging service cost, the electricity quantity service unit price being determined based on vehicle model information of the vehicle; and

determine a sum of the electricity quantity cost and the charging service cost as the charging electricity quantity cost.

15. The billing apparatus according to claim 14, wherein the charging electricity quantity comprises a charging sub-electricity quantity respectively corresponding to the at least one charging power range;

the electricity quantity service unit price comprises an electricity quantity service sub-unit price respectively corresponding to the at least one charging power range; and

the second determining unit is further configured to:

for each of the charging power ranges, determine, based on the electricity quantity service sub-unit price of the charging power range and the charging sub-electricity quantity corresponding to the charging power range, a charging service sub-cost of the charging power range, and

determine a sum of the at least one charging service sub-cost as the charging service cost.

16. The billing apparatus according to any one of claims 11 to 15, wherein the billing apparatus further comprises a fourth determining unit;

the fourth determining unit is configured to:

acquire space occupation time of the vehicle, the space occupation time being the time during which the vehicle is in a charging platform but is not charged, and

determine, based on the space occupation time and a space occupation unit price, a space occupation cost of the vehicle; and

the third determining unit is further configured to determine, based on the charging electricity quantity cost, the charging time cost and the space occupation cost, the charging cost of the vehicle.

17. The billing apparatus according to any one of claims 11 to 16, wherein the fifth determining unit is further configured to:

determine, based on the at least one predicted power range, a predicted average power of the vehicle;
determine, based on a predicted charging electricity quantity of the vehicle and the predicted average power of the vehicle, predicted charging time of the vehicle;
determine, based on the power range unit price respectively corresponding to the at least one predicted power range, an average power range unit price; and
determine, based on the predicted charging time of the vehicle, the average power range unit price and the predicted charging electricity quantity of the vehicle, the charging time cost unit price of the vehicle.

18. A billing device for vehicle charging, comprising:

a memory, configured to store executable instructions; and
a processor, configured to implement steps in the billing method for vehicle charging according to any one of claims 1 to 10 when executing the executable instructions stored in the memory.

19. A computer-readable storage medium, having executable instructions stored therein, wherein the executable instructions, when executed by a processor, implement steps in the billing method for vehicle charging according to any one of claims 1 to 10.

20. A computer program product, comprising computer programs or instructions, wherein the computer programs or instructions, when executed by a processor, implement steps in the billing method for vehicle charging according to any one of claims 1 to 10.

| Acquire at least one piece of charging power information of a vehicle in a charging process and a charging electricity quantity of the vehicle | S101 |

↓

| Determine, based on at least one charging power range and a charging duration corresponding to the at least one charging power range, a charging time cost of the vehicle | S102 |

↓

| Determine, based on the charging electricity quantity, a charging electricity quantity cost of the vehicle | S103 |

↓

| Determine, based on the charging electricity quantity cost of the vehicle and the charging time cost of the vehicle, a charging cost of the vehicle | S104 |

FIG. 1

| Acquire at least one piece of charging power information of a vehicle in a charging process and a charging electricity quantity of the vehicle | S101 |

↓

| For each charging power range, determine, based on the charging power range, a power range unit price corresponding to the charging power range | S201 |

↓

| For each charging power range, determine, based on the power range unit price corresponding to the charging power range and a charging duration corresponding to the charging power range, a charging time range cost of the charging power range | S202 |

↓

| Determine a sum of the charging time range cost respectively corresponding to the at least one charging power range as a charging time cost of the vehicle | S203 |

↓

| Determine, based on the charging electricity quantity, a charging electricity quantity cost of the vehicle | S103 |

↓

| Determine, based on the charging electricity quantity cost of the vehicle and the charging time cost of the vehicle, a charging cost of the vehicle | S104 |

FIG. 2

| Acquire vehicle model information of a vehicle | S301 |

↓

| For each charging power range, update, based on vehicle model information of the vehicle, a charging time range cost of the charging power range to obtain an updated charging time range cost of the charging power range | S302 |

↓

| Determine a sum of the updated charging time range cost respectively corresponding to the at least one charging power range as a charging time cost of the vehicle | S303 |

FIG. 3

Determine, based on a charging electricity quantity and a preset electricity quantity unit price, an electricity quantity cost — S401

Determine, based on the charging electricity quantity and an electricity quantity service unit price, a charging service cost, where the electricity quantity service unit price is determined based on vehicle model information of the vehicle — S402

For each charging power range, determine, based on an electricity quantity service sub-unit price of the charging power range and a charging sub-electricity quantity of the charging power range, a charging service sub-cost of the charging power range — S4021

Determine a sum of the at least one charging service sub-cost as the charging service cost — S4022

Determine a sum of the electricity quantity cost and a charging service cost as a charging electricity quantity cost — S403

FIG. 4

Acquire space occupation time of a vehicle — S501

Determine, based on the space occupation time and a space occupation unit price, a space occupation cost of the vehicle — S502

Determine, based on a charging electricity quantity cost, a charging time cost and the space occupation cost, a charging cost of the vehicle — S503

FIG. 5

Determine, based on vehicle type information of a vehicle, at least one predicted power range of the vehicle — S601

Determine, based on the at least one predicted power range and a power range unit price respectively corresponding to the at least one predicted power range, a charging time cost unit price of the vehicle — S602

Determine, based on the at least one predicted power range, a predicted average power of the vehicle — S6021

Determine, based on a predicted charging electricity quantity of the vehicle and the predicted average power of the vehicle, predicted charging time of the vehicle — S6022

Determine, based on the power range unit price respectively corresponding to the at least one predicted power range, an average power range unit price — S6023

Determine, based on the predicted charging time of the vehicle, the average power range unit price and the predicted charging electricity quantity of the vehicle, the charging time cost unit price of the vehicle — S6024

Determine a sum of a preset electricity quantity unit price, an electricity quantity service unit price and a charging time cost unit price as a predicted charging unit price of the vehicle — S603

FIG. 6

| Determine a cross-power range of a vehicle | S701 |

| Determine, based on the cross-power range of the vehicle, an average power | S702 |

| Determine, based on a predicted charging electricity quantity of the vehicle and the average power, charging time | S703 |

| Determine, based on a range service cost of each cross-power sub-range of the cross-power range, an average service cost | S704 |

| Determine, based on the predicted charging electricity quantity of the vehicle and the average service cost, a time service cost | S705 |

| Determine, based on the time service cost and the predicted charging electricity quantity of the vehicle, a time service cost unit price | S706 |

| Determine a sum of the time service cost unit price, an electricity charge unit price and a kilowatt-hour service cost unit price as a price displayed to a user by a front end | S707 |

FIG. 7

| Determine, based on charging time corresponding to a charging power range of a vehicle in a charging process and a power range service cost unit price corresponding to the charging power range, a time service cost | S801 |

| Determine, based on a charging kilowatt-hour number of the vehicle and an electricity charge unit price, an electricity charge of the vehicle | S802 |

| Determine, based on the charging kilowatt-hour number of the vehicle and a service cost unit price, a kilowatt-hour service cost of the vehicle | S803 |

| Determine, based on the kilowatt-hour service cost of the vehicle, the electricity charge and the time service cost, an order amount of the vehicle | S804 |

FIG. 8

Billing apparatus for vehicle charging
900

Acquiring unit 901

First determining unit 902

Second determining unit 903

Third determining unit 904

FIG. 9

1000

Billing device for vehicle charging

Communication interface 1002

1003 Memory

Bus 1004

Processor 1001

FIG. 10

## INTERNATIONAL SEARCH REPORT

| International application No. |
|---|
| **PCT/CN2024/135365** |

**A. CLASSIFICATION OF SUBJECT MATTER**

G07F15/12(2006.01)i; G06Q50/10(2012.01)i

According to International Patent Classification (IPC) or to both national classification and IPC

**B. FIELDS SEARCHED**

Minimum documentation searched (classification system followed by classification symbols)

IPC: G07F15, G07B15, G06Q

Documentation searched other than minimum documentation to the extent that such documents are included in the fields searched

Electronic data base consulted during the international search (name of data base and, where practicable, search terms used)

CNTXT: DWPI; WPABS; ENTXT: 时间, 费用, 车, 型号, 更新, 充电, 电量, 功率, time, fee, expense, car, vehicle, charge, electricity, power, update

**C. DOCUMENTS CONSIDERED TO BE RELEVANT**

| Category* | Citation of document, with indication, where appropriate, of the relevant passages | Relevant to claim No. |
|---|---|---|
| Y | CN 104952115 A (WUHAN UNIVERSITY et al.) 30 September 2015 (2015-09-30) description, paragraphs 0038-0065, and figures 1-6 | 1-20 |
| Y | CN 116311683 A (GUANGDONG LIDUN NEW ENERGY TECHNOLOGY CO., LTD.) 23 June 2023 (2023-06-23) description, paragraphs 0057-0195, and figures 1-3 | 1-20 |
| PX | CN 118470859 A (CONTEMPORARY AMPEREX TECHNOLOGY CO., LTD. et al.) 09 August 2024 (2024-08-09) entire document | 1-20 |
| A | CN 104766201 A (STATE GRID CORPORATION OF CHINA et al.) 08 July 2015 (2015-07-08) entire document | 1-20 |
| A | CN 111055716 A (STATE GRID BEIJING ELECTRIC POWER COMPANY et al.) 24 April 2020 (2020-04-24) entire document | 1-20 |
| A | JP 2015041300 A (JX NIPPON OIL & ENERGY CORP.) 02 March 2015 (2015-03-02) entire document | 1-20 |

☑ Further documents are listed in the continuation of Box C.    ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **28 March 2025** | **03 April 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/135365**

| C. | DOCUMENTS CONSIDERED TO BE RELEVANT | |
|---|---|---|
| Category* | Citation of document, with indication, where appropriate, of the relevant passages | Relevant to claim No. |
| A | US 2016232736 A1 (TANKTWO OY) 11 August 2016 (2016-08-11)<br>entire document | 1-20 |

Form PCT/ISA/210 (second sheet) (July 2022)

**INTERNATIONAL SEARCH REPORT**
Information on patent family members

International application No.

**PCT/CN2024/135365**

| Patent document cited in search report | | | Publication date (day/month/year) | Patent family member(s) | | | Publication date (day/month/year) |
|---|---|---|---|---|---|---|---|
| CN | 104952115 | A | 30 September 2015 | None | | | |
| CN | 116311683 | A | 23 June 2023 | None | | | |
| CN | 118470859 | A | 09 August 2024 | None | | | |
| CN | 104766201 | A | 08 July 2015 | None | | | |
| CN | 111055716 | A | 24 April 2020 | None | | | |
| JP | 2015041300 | A | 02 March 2015 | JP | 6227323 | B2 | 08 November 2017 |
| US | 2016232736 | A1 | 11 August 2016 | EP | 3044027 | A1 | 20 July 2016 |
| | | | | EP | 3044027 | B1 | 23 May 2018 |
| | | | | WO | 2015036446 | A1 | 19 March 2015 |
| | | | | GB | 201400648 | D0 | 05 March 2014 |
| | | | | GB | 2518248 | A | 18 March 2015 |
| | | | | US | 10229552 | B2 | 12 March 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410912357